# EUROPEAN PATENT SPECIFICATION

(11) **EP 4 207 621 B1**
(45) Date of publication and mention of the grant of the patent: **21.10.2026**
(21) Application number: 21860162.3
(22) Date of filing: 12.08.2021
(51) Int. Cl.: H04B 7/0456, H04B 7/06

(54) **PRECODING MATRIX INDICATOR DETERMINATION METHOD, TERMINAL DEVICE, AND STORAGE MEDIUM**
VERFAHREN ZUR BESTIMMUNG EINES VORCODIERUNGSMATRIXINDIKATORS, ENDGERÄTEVORRICHTUNG UND SPEICHERMEDIUM
PROCÉDÉ DE DÉTERMINATION D'INDICATEUR DE MATRICE DE PRÉCODAGE, DISPOSITIF DE TERMINAL ET SUPPORT DE STOCKAGE

(30) Priority: 27.08.2020 CN 202010880423
(43) Date of publication of application: 05.07.2023
(73) Proprietor: ZTE Corporation, Shenzhen, Guangdong 518057 (CN)
(72) Inventor: MA, Yu, Shenzhen, Guangdong 518057 (CN)
(74) Representative: Novagraaf Technologies
(86) International application number: PCT/CN2021/112327
(87) International publication number: WO 2022/042323

(56) References cited:
- CN-A- 102 594 502
- CN-A- 106 559 111
- CN-A- 106 856 413
- US-A1- 2011 075 746
- US-A1- 2018 248 606
- US-A1- 2019 229 786

## Description

### Technical Field

The embodiments of the present application relate to the field of communications technologies, and in particular, to a method for determining a precoding matrix index, a terminal device, and a storage medium.

### Background

A channel state information reference signal (CSI-RS) is used as a reference signal for detecting channel state information (CSI), a mobile terminal can perform channel state information detection to obtain a channel state information reference signal, and can send, according to the channel state information reference signal, a precoding matrix indicator (PMI) which best matches a channel condition and demodulation performance of the mobile terminal to a base station, so that the base station can perform scheduling and downlink beamforming, and therefore the detection of the channel state information reference signal has great significance in downlink beamforming of wireless communication and directly affects downlink service traffic.

A channel state information reference signal is based on detection of a codebook. The codebook is a conjugate transpose matrix for representing different features of a wireless channel, and both a base station and a mobile terminal can acquire the codebook. The most time-consuming for the detection of a channel state information reference signal lies in the traversal of codebooks. In a fifth generation mobile networks (5G), the number of codebooks becomes larger, and a detection operation amount increases, thereby affecting the efficiency and accuracy of determining a precoding matrix indicator. Patent documents US2018248606A1, US2019229786A1 and CN106856413A provide related technical solutions; however, the above mentioned problem still remains unsolved.

### Summary

The embodiments of the present application provide a method for determining a precoding matrix according to independent claim 1.

The embodiments of the present application also provide a terminal device, comprising a memory and a processor, wherein the memory is configured to store a computer program; and the processor is configured to execute the computer program and implement, when executing the computer program, the described method for determining a precoding matrix indicator.

The embodiments of the present application further provide a computer readable storage medium, wherein the computer-readable storage medium stores a computer program, and the computer program, when executed by a processor, causes the processor to implement the described method for determining a precoding matrix indicator.

### Brief Description of the Drawings

To describe the technical solutions in the embodiments of the present application more clearly, the following briefly describes the accompanying drawings required for describing the embodiments. Apparently, the accompanying drawings in the following description show merely some embodiments of the present application, and a person of ordinary skill in the art may still derive other accompanying drawings from these accompanying drawings without creative efforts.
Fig. 1 is a schematic flowchart I of a method for determining a precoding matrix indicator according to an embodiment of the present application;
Fig. 2 is a schematic flowchart II of a method for determining a precoding matrix indicator according to an embodiment of the present application;
Fig. 3 is a schematic flowchart I of another method for determining a precoding matrix indicator according to an embodiment of the present application;
Fig. 4 is a schematic flowchart II of another method for determining a precoding matrix index according to an embodiment of the present application;
Fig. 5 is a schematic flowchart III of another method for determining a precoding matrix index according to an embodiment of the present application;
Fig. 6 is a schematic structural block diagram of a terminal device according to an embodiment of the present application.

### Detailed Description of the Embodiments

The embodiments of the present application provide a method for determining a precoding matrix indicator, a terminal device, and a storage medium, which can improve the efficiency and accuracy of determining a precoding matrix indicator.

Hereinafter, the technical solutions in the embodiments of the present application will be described clearly and completely with reference to the accompanying drawings of the embodiments of the present application. Obviously, the embodiments as described are only some of the embodiments of the present application, and are not all of the embodiments. All other embodiments obtained by those of ordinary skill in the art on the basis of the embodiments in the present application without creative work shall fall within the scope of protection of the present application.

The flowcharts shown in the drawings are merely illustrative and do not have to include all of the contents and operations/steps, nor do they have to be performed in the order depicted. For example, some operations/steps may also be broken down, combined or partially merged, so the actual order of execution may change depending on the actual situation.

It is to be understood that the terms used herein in the description of the present application are used only for the purpose describing particular embodiments and are not intended to limit the present application. As being used in the description and the claims of the present application, unless the context clearly indicates otherwise, the singular forms "a", "an", and "the" are intended to include the plural forms.

It should also be understood that the term "and/or" used in the description and the claims refers to any and all possible combinations of one or more of relevant listed items and includes these combinations.

The embodiments of the present application provide a method for determining a precoding matrix indicator, a terminal device, and a storage medium. Some embodiments of the present application will be described in detail below with reference to the accompanying drawings. The embodiments and the features in the embodiments can be combined without conflicts.

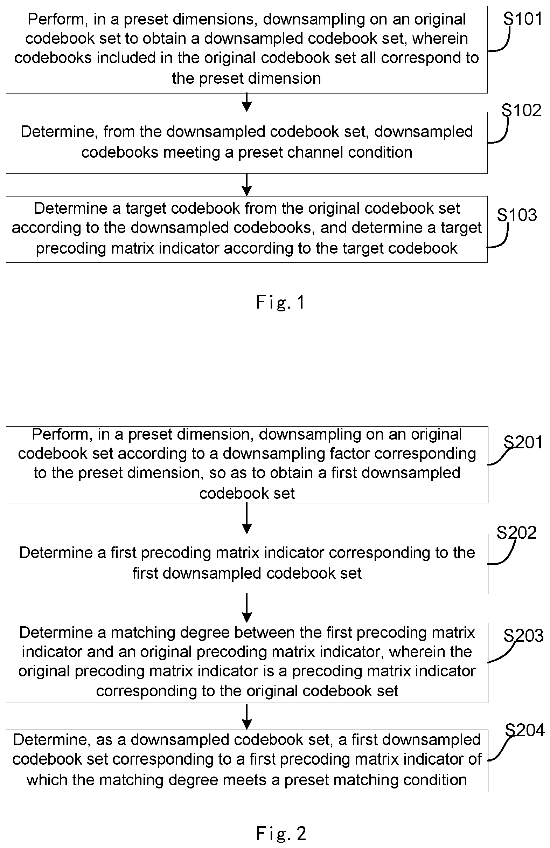

Refer to Fig. 1, Fig. 1 is a schematic flowchart of a method for determining a precoding matrix indicator according to an embodiment of the present application. The method may be applied to a terminal device. As shown in Fig. 1, the method for determining a precoding matrix indicator specifically includes step S101 to step S103:
S101, Perform, in a preset dimension, downsampling on an original codebook set to obtain a downsampled codebook set, wherein codebooks included in the original codebook set all correspond to the preset dimension.

Specifically, the original codebook set may be a preset codebook set, the original codebook set comprises a plurality of codebooks, the codebooks in the original codebook set may be defined according to a plurality of dimensions, and therefore each codebook corresponds to a plurality of preset dimension. For example, if the codebooks are defined according to four dimensions, each codebook corresponds to four dimensions, that is, the preset dimension include four dimensions.

In an embodiment, the preset dimension include a horizontal dimension, a vertical dimension, a phase value dimension, and a phase difference (PhaseDiff) dimension of the dual-polarized antenna. The codebooks have corresponding index values in a preset dimension, and the corresponding codebooks may be acquired according to the index values in the preset dimension, for example, the index values may be address information of the codebooks.

Specifically, downsampling can be an operation of performing sampling in an original codebook set to determine some codebooks, wherein codebooks in the original codebook set correspond to preset dimension; if the preset dimension include a plurality of dimensions, the original codebook set can be downsampled in each dimension, and the downsampled codebook set can be obtained after downsampling is performed on the original codebook set in all dimensions. Codebooks included in the downsampled codebook set all belong to the original codebook set. For example, the codebooks may be obtained by performing sampling at fixed intervals in a preset dimension.

In an embodiment, downsampling may be performed for each preset dimension, wherein downsampling may be performed on the original codebook set in the preset dimension according to a preset downsampling factor corresponding to the preset dimension, and the downsampled codebook set may be obtained after downsampling is performed on the original codebook set in all the preset dimension. The preset downsampling factor may be preset, for example, the preset downsampling factor may be 1/2, 1/3, or 1/4, etc.

S102, Determine, from the downsampled codebook set, downsampled codebooks meeting a preset channel condition.

Specifically, the downsampled codebook set comprises codebooks obtained by performing sampling on the original codebook set, the number of codebooks in the downsampled codebook set is less than that of the original codebook set, and therefore all the codebooks included in the downsampled codebook set can be traversed, the channel capacity corresponding to each codebook is calculated respectively, and codebooks of which channel capacities meet a preset channel condition are determined as downsampled codebooks.

In specific implementation, the preset channel condition may be a condition for reflecting that a channel transmission condition meets a transmission requirement. If the channel capacities corresponding to codebooks meet a preset channel condition, a terminal device may obtain a better channel transmission effect by using the codebooks when performing communication transmission, that is, downsampled codebooks meeting the preset channel condition may obtain a better channel transmission effect.

In an embodiment, determining, from the downsampled codebook set, downsampled codebooks meeting a preset channel condition comprises: determining a channel capacity corresponding to a codebook included in the downsampled codebook set, and determining a codebook with the maximum channel capacity as a downsampled codebook.

In specific implementation, the maximum channel capacity represents that a channel transmission effect corresponding to a codebook is the best, and a maximum channel capacity may be set as a preset channel condition. All the codebooks included in the downsampled codebook set are traversed, a channel capacity corresponding to each codebook is calculated respectively, and codebooks with the maximum channel capacity is determined as downsampled codebooks, i.e. the downsampled codebooks are codebooks with the best corresponding channel transmission effect in the downsampled codebook set.

S103, Determine a target codebook from the original codebook set according to the downsampled codebooks, and determine a target precoding matrix indicator according to the target codebook.

Specifically, downsampled codebooks are codebooks with the best channel transmission effect in the downsampled codebook set, and the downsampled codebook set includes some codebooks determined by performing downsampling on the original codebook set. Although the downsampled codebooks are not necessarily codebooks with the best channel transmission effect in the original codebook set, the downsampled codebooks serve as codebooks with the best channel transmission effect in the downsampled codebook set, that is, in the original codebook set, the downsampled codebooks are closer to codebooks with the best channel transmission effect in the original codebook set, and therefore a codebook range that needs to be traversed in the original codebook set can be narrowed according to the downsampled codebooks. For example, a traversing codebook range that can be traversed can be determined according to downsampled codebooks, and target codebook is determined from a traversed codebook range of an original codebook set, wherein the target codebook may be a codebook with a channel transmission effect meeting a transmission requirement condition and selected from the original codebook set, for example, may be a codebook with a maximum channel capacity in the original codebook set.

Specifically, a precoding matrix indicator (PMI) is used to indicate a codebook, that is, the terminal device may obtain a corresponding codebook according to the precoding matrix indicator. After the target codebook is determined, a precoding matrix indicator of the target codebook can be determined and determined as a target precoding matrix indicator, and the terminal device can acquire the corresponding target codebook according to the target precoding matrix indicator.

In the embodiments of the present application, by performing a downsampling operation on an original codebook set in a preset dimension, the number of codebooks needing to be traversed is reduced, thereby improving detection efficiency; in addition, downsampled codebooks having a relatively good channel transmission effect are determined from the downsampled codebook set, and a target codebook is determined from the original codebook set according to the downsampled codebooks, thereby improving the accuracy of the target codebook, and further improving the accuracy of determining a precoding matrix indicator.

In an embodiment, as shown in Fig. 2, the operation of performing downsampling on an original codebook set in a preset dimension to obtain a downsampled codebook set is implemented in the following manner:
S201, performing, in a preset dimension, downsampling on an original codebook set according to a downsampling factor corresponding to the preset dimension, so as to obtain a first downsampled codebook set;
S202, determining a first precoding matrix indicator corresponding to the first downsampled codebook set;
S203, determining a matching degree between the first precoding matrix indicator and an original precoding matrix indicator, wherein the original precoding matrix indicator is a precoding matrix indicator corresponding to the original codebook set; and
S204, determining, as a downsampled codebook set, a first downsampled codebook set corresponding to a first precoding matrix indicator of which the matching degree meets a preset matching condition.

Specifically, the downsampling factor corresponding to each preset dimension may include a plurality of factors, and for each preset dimension, each factor is used to perform downsampling on the original codebook set, and after the downsampling operation is completed in all the preset dimension, a corresponding first downsampled codebook set may be obtained. Different factors correspond to different first downsampled codebook sets, and a most reasonable first downsampled codebook set may be selected therefrom as a downsampled codebook set.

Specifically, determining a first precoding matrix indicator corresponding to the first downsampled codebook set may be implemented in the following manner: determining a codebook with the maximum channel capacity in the first downsampled codebook set, and determining, as a first precoding matrix indicator, a precoding matrix indicator corresponding to the codebook with the maximum channel capacity.

In an embodiment, a first precoding matrix indicator may be determined according to a first downsampled codebook set, and a matching degree between the first precoding matrix indicator and an original precoding matrix indicator is used as a basis for determining whether the first downsampled codebook set is reasonable. The original precoding matrix indicator may be a precoding matrix indicator corresponding to a codebook with a maximum channel capacity determined from the original codebook set, and the first precoding matrix indicator may be a precoding matrix indicator corresponding to a codebook with a maximum channel capacity determined from the first downsampled codebook set.

Specifically, a higher matching degree between the first precoding matrix indicator and the original precoding matrix indicator indicates that a codebook with the maximum channel capacity determined from the first downsampled codebook set is closer to a codebook with the maximum channel capacity determined from the original precoding matrix indicator; therefore, the first downsampled codebook set is a codebook set obtained by means of relatively reasonable downsampling, and therefore the first downsampled codebook set can be determined as a downsampled codebook set.

In an example, a preset matching condition may be a condition for determining that a codebook with the maximum channel capacity determined from the first downsampled codebook set is close enough to a codebook with the maximum channel capacity determined from the original precoding matrix indicator.

In an embodiment, the preset dimension correspond to a plurality of different downsampling factors, and the method further comprises the following operations: determining matching degrees corresponding to the plurality of different downsampling factors, wherein the matching degree corresponding to each downsampling factor is: a matching degree of a first precoding matrix indicator of a first downsampled codebook set obtained by performing downsampling on an original codebook set according to the downsampling factor, and an original precoding matrix indicator.

Accordingly, the operation of determining, as a downsampled codebook set, a first downsampled codebook set corresponding to a first precoding matrix indicator of which the matching degree meets a preset matching condition may be implemented in the following manner: determining, from the plurality of different downsampling factors, a target downsampling factor of which the matching degree meets a preset matching condition, wherein the matching degree of the target downsampling factor is greater than the matching degrees corresponding to other downsampling factors among the plurality of different downsampling factors; and determining, as a downsampled codebook set, a first downsampled codebook set of a first precoding matrix indicator corresponding to the target downsampling factor.

Specifically, if a matching degree between a first precoding matrix indicator corresponding to a certain downsampling factor and an original precoding matrix indicator is higher than matching degrees corresponding to other downsampling factors, it indicates that a codebook with the maximum channel capacity determined from the first downsampled codebook set and corresponding to the downsampling factor is closest to a codebook with the maximum channel capacity determined from the original codebook set; therefore, it can be determined that a preset matching condition is met, the first downsampled codebook set can be determined as a downsampled codebook set, and accordingly, the downsampled codebook determined from the downsampled codebook set according to the preset channel condition is closer to the codebook with the maximum channel capacity determined from the original codebook set, thereby further improving the accuracy of determining a precoding matrix indicator.

In an embodiment, the present application can also monitor the change of service traffic in subsequent environmental tests, the service traffic being the amount of data transmitted in a base station and a terminal device in a wireless communication system, and can adjust a downsampling factor according to the change of the service traffic, and can use a factor that maximizes the service traffic as the downsampling factor, so as to further obtain a better downsampling result.

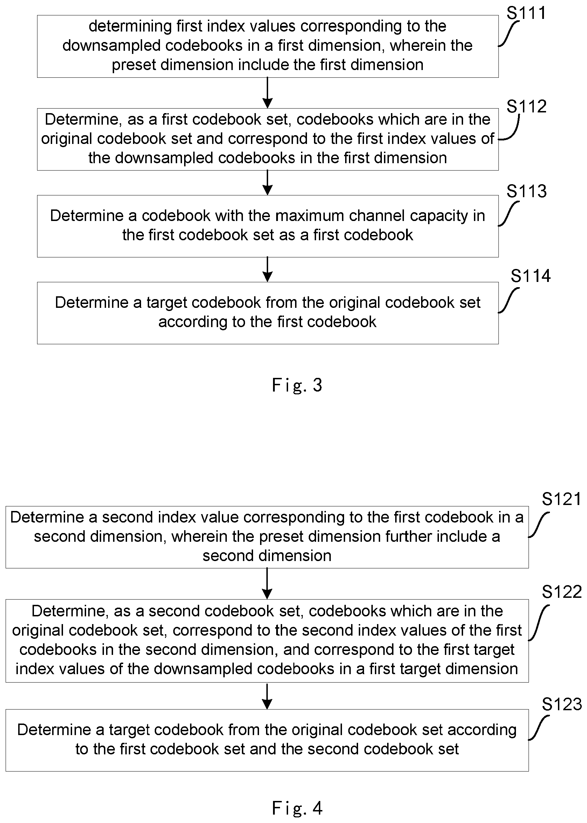

In an embodiment, as shown in Fig. 3, the operation of determining a target codebook from the original codebook set according to the downsampled codebooks may be implemented in the following manner:
S111: determining first index values corresponding to the downsampled codebooks in a first dimension, wherein the preset dimension include the first dimension.

Specifically, the first dimension may be one or more dimensions in a preset dimension, and may be a dimension with a lower direction number among the preset dimension. In an embodiment, the first dimension includes a vertical dimension, a phase value dimension, and a phase difference dimension of the dual-polarized antenna.

Specifically, downsampled codebooks are codebooks with a relatively large channel capacity in a downsampled codebook set, and therefore the index values corresponding to the downsampled codebooks in a preset dimension may be closer to an index value of a codebook with the maximum channel capacity in the original codebook set. By determining first index values corresponding to the downsampled codebooks in the first dimension, the first index values of the downsampled codebooks are also closer to a first index value of a codebook with a maximum channel capacity in the original codebook set. In addition, the codebook range that needs to be traversed may be reduced from the original codebook set according to the first index values of the downsampled codebooks.

S112, Determine, as a first codebook set, codebooks which are in the original codebook set and correspond to the first index values of the downsampled codebooks in the first dimension.

S113, Determine a codebook with the maximum channel capacity in the first codebook set as a first codebook.

S114, Determine a target codebook from the original codebook set according to the first codebook.

Specifically, index values corresponding to a first dimension are determined as first index values of downsampled codebooks, and the corresponding codebooks of said first index value in the original codebook set have corresponding first index values in the first dimension with the downsampled codebooks, but include all index values corresponding to the second dimension in the second dimension. The preset codebook further includes a second dimension, the second dimension is a dimension among the preset dimension other than the first dimension, and In an embodiment, the second dimension includes a horizontal dimension.

In the embodiments of the present application, the downsampled codebooks are obtained by performing a downsampling operation on an original codebook set, and therefore the downsampled codebooks also abandon some codebooks in the second dimension; in addition, by making a first codebook set comprise all codebooks corresponding to the second dimension, a codebook with the maximum channel capacity is selected from the first codebook set as a first codebook, and an index value of the first codebook in the second dimension is closer to an index value of the codebook with the maximum channel capacity in the original codebook set than that of the downsampled codebooks. Therefore, a target codebook can be determined from an original codebook set according to a first codebook, which not only can reduce a codebook range that needs to be traversed in the original codebook set, but also can further improve the accuracy of the target codebook, thereby further improving the accuracy of determining a precoding matrix indicator.

In an embodiment, as shown in Fig. 4, the operation of determining a target codebook from the original codebook set according to the first codebook may be implemented in the following manner:
S121, determine a second index value corresponding to the first codebook in a second dimension, wherein the preset dimension further include a second dimension.

Specifically, the first codebook is a codebook the maximum channel capacity determined from the first codebook set, and the first codebook set corresponds to all the index values in the second dimension; therefore, the index value, in the second dimension, of the first codebook determined from the first codebook set is closer to the index value of the codebook with the maximum channel capacity in the original codebook set. Hence, the second index value corresponding to the first codebook in the second dimension may be determined, so that the accurate target codebook may be found according to the second index value.

S122: determine, as a second codebook set, codebooks which are in the original codebook set, correspond to the second index values of the first codebooks in the second dimension, and correspond to the first target index values of the downsampled codebooks in a first target dimension, wherein the first dimension comprises the first target dimension, and the first index values comprise a first target index value corresponding to the first target dimension.

Specifically, the first target dimension may be any dimension in the first dimension, and may be a dimension in the first dimension other than a dimension having a highest direction number and a dimension having a lowest direction number. In an embodiment, the first target dimension includes a phase difference dimension of the dual-polarized antenna, and the first target index value corresponding to the first target dimension is an index value corresponding to the phase difference dimension of the dual-polarized antenna.

Specifically, index values corresponding to the second dimension are determined as second index values of the first codebooks, index values of the first target dimension are determined as first target index values of the downsampled codebooks, and the corresponding codebooks of said second index values and said first target index values in the original codebook set have corresponding first target index values in the first target dimension with the downsampled codebooks, but include all index values corresponding to the second target dimension in the second target dimension. The second target dimension is a dimension other than the first target dimension in the first dimension, and In an embodiment, the second target dimension includes a vertical dimension and a phase value dimension.

S123, Determine a target codebook from the original codebook set according to the first codebook set and the second codebook set.

Specifically, all index values, in the second dimension, of the codebooks included in the first codebook set corresponding to the second dimension, and all index values, in the second dimension, of the codebooks included in the second codebook set corresponding to the second dimension are the codebooks that are in the first codebook set and the second codebook set and closer to the codebook with the maximum channel capacity in the original codebook set, and therefore the target codebook may be determined from the original codebook set according to the first codebook set and the second codebook set.

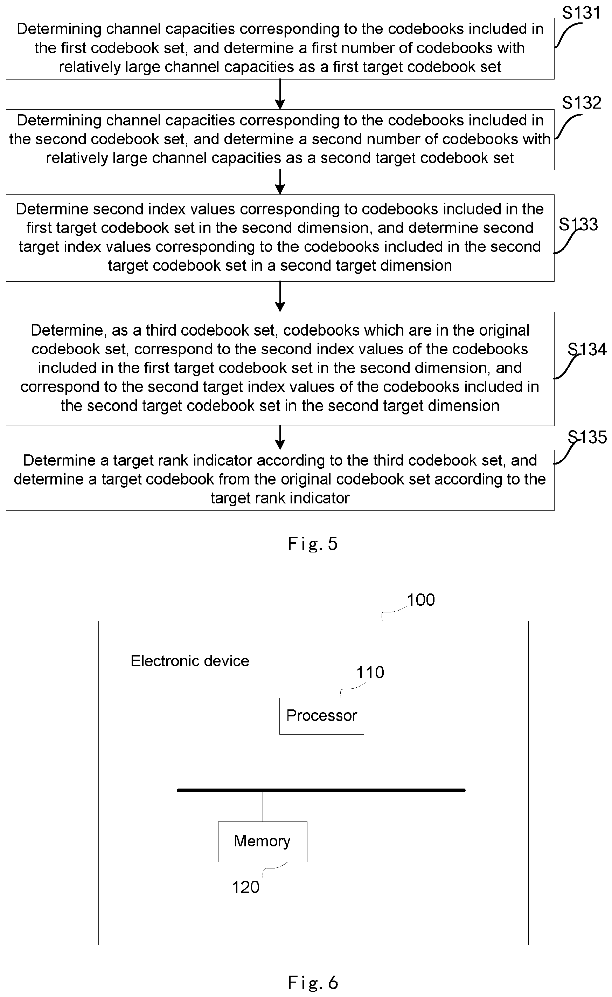

In an embodiment, as shown in Fig. 5, the operation of determining a target codebook from the original codebook set according to the first codebook set and the second codebook set may be implemented in the following manner:
S131, determining channel capacities corresponding to the codebooks included in the first codebook set, and determining a first number of codebooks with relatively large channel capacities as a first target codebook set; and
S132, determining channel capacities corresponding to the codebooks included in the second codebook set, and determining a second number of codebooks with relatively large channel capacities as a second target codebook set.

Specifically, the codebooks in the first codebook set are traversed, and a channel capacity corresponding to each codebook is calculated respectively; a first number of codebooks with a relatively large channel capacity are selected therefrom as a first target codebook set, that is, the first target codebook set is a codebook set with a good channel transmission condition in the first codebook set; and the first target codebook set excludes codebooks with a poor channel transmission condition in the first codebook set.

Specifically, the codebooks in the second codebook set are traversed, and a channel capacity corresponding to each codebook is calculated respectively; a second number of codebooks with a relatively large channel capacity are selected therefrom as a second target codebook set, that is, the second target codebook set is a codebook set with a good channel transmission condition in the second codebook set; and the second target codebook set excludes codebooks with a poor channel transmission condition in the second codebook set. The specific values of the first number and the second number may be set according to actual situations, which is not limited herein.

S133: Determine second index values corresponding to codebooks included in the first target codebook set in the second dimension, and determine second target index values corresponding to the codebooks included in the second target codebook set in a second target dimension, wherein the first dimension further comprises the second target dimension, and the first index values comprise second target index values corresponding to the second target dimension.

Specifically, the first target codebook set is a codebook set with a better channel transmission determined from the first target codebook, and the codebooks in the first target codebook include all corresponding index values in the second dimension; therefore, the second index values corresponding to the first target codebook set in the second dimension are closer to the codebook with the maximum channel capacity in the original codebook set than the downsampled codebooks or the first codebooks.

Specifically, the second target codebook set is a codebook set with a better channel transmission condition determined from the second target codebook, and the codebooks in the second target codebooks include all index values corresponding to the second target dimension; therefore, the second target index values corresponding to the second target codebook set in the second target dimension are closer to the codebook with the maximum channel capacity in the original codebook set than the downsampled codebooks or the first codebooks. Therefore, second index values corresponding to the first target codebook set in the second dimension and second target index values corresponding to the second target codebook set in the second target dimension may be determined, and then a codebook range that needs to be traversed in the original codebook set may be determined according to the two groups of index values.

S134, determine, as a third codebook set, codebooks which are in the original codebook set, correspond to the second index values of the codebooks included in the first target codebook set in the second dimension, and correspond to the second target index values of the codebooks included in the second target codebook set in the second target dimension.

Specifically, index values corresponding to the second dimension are determined to be second index values of codebooks included in the first target codebook set, and index values of the second target dimension are determined to be second target index values of codebooks included in the second target codebook set. The corresponding codebooks of said second index values and said second target index values in the original codebook set are closer to a codebook with the maximum channel capacity in the original codebook set than the downsampled codebooks or the first codebooks.

S135, Determine a target rank indicator according to the third codebook set, and determine a target codebook from the original codebook set according to the target rank indicator.

Specifically, each codebook may correspond to different channel capacities under different rank indicators, and therefore, a rank indicator corresponding to a codebook with a best channel transmission effect may be determined as a target rank indicator from the channel capacities corresponding to the codebooks in the third codebook set under different rank indicators.

In an embodiment, the operation of determining a target rank indicator according to the third codebook set may be implemented in the following manner: determining channel capacities, under a preset rank indicator, of codebooks included in the third codebook set, and determining a preset rank indicator corresponding to a maximum channel capacity as a target rank indicator.

The channel capacity of each codebook in the third codebook set under each preset rank indicator may be calculated respectively, a maximum channel capacity thereof is determined, and a preset rank indicator corresponding to the maximum channel capacity is determined as the target rank indicator. For example, preset rank indicators comprise 1, 2, 3 and 4, the channel capacities of each codebook under four conditions of rank indicators 1, 2, 3 and 4 are calculated respectively, the channel capacities corresponding to all the codebooks under all the preset rank indicators are determined, and a preset rank indicator corresponding to the maximum channel capacity thereof is determined as the target rank indicator.

In an embodiment, the operation of determining a target codebook from the original codebook set according to the target rank indicator may be implemented in the following manner: determining, as a third codebook set, codebooks which are in the original codebook set, correspond to the second index values of the codebooks included in the first target codebook set in the second dimension, correspond to the second target index values of the codebooks included in the second target codebook set in the second target dimension, and correspond to third target index values in the first target dimension, wherein the third target index values comprise other index values, except the first target index values of the downsampled codebooks, among all the index values corresponding to the first target dimension; and determining channel capacities corresponding to the codebooks included in the fourth codebook set on the target rank indicator, and determining a codebook with the maximum channel capacity as a target codebook.

When the first target codebooks and the second target codebooks are determined, the first target index values of the downsampled codebooks have already been calculated, and therefore the index values, other than the first target index value of the downsampled codebooks, among all the index values corresponding to the first target dimension may be determined as the third target index values.

The index values corresponding to the second dimension are determined as second index values of codebooks included in the first target codebook set, the index values of the second target dimension are determined as second target index values of codebooks included in the second target codebook set, and the index values of the first target dimension are determined as third target index values, wherein the corresponding codebooks of said second index values, said second target index values and said third target index values have corresponding second index values with the second target codebook set, and include index values, other than the first target index value of the downsampled codebook, among all the index values included in the first target dimension.

The codebooks included in the first target codebook set are closer, in the second dimension, to the codebook with the maximum channel capacity in the original codebook set, the codebooks included in the second target codebook set are closer, in the second target codebook set, to the codebook with the maximum channel capacity in the original codebook set, and the third target index values of the first target dimension include index values, other than the first target index values of the downsampled codebooks, among all the index values corresponding to the first target dimension, then a traversing range relating to all preset dimension and codebooks close enough to the codebook with the maximum channel capacity in an original codebook set can be obtained as a fourth codebook set, and thus a target codebook can be determined from the fourth codebook set.

According to the determined target rank indicator, the corresponding channel capacities of the codebooks in the fourth codebook set on the target rank indicator can be traversed, and then a codebook with the maximum channel capacity is selected as the target codebook. In this way, a target codebook, in the original codebook set, with the best channel transmission effect in all preset dimension and on the rank indicator can be determined, and the target precoding matrix indicator is determined according to the target codebook, so that the terminal device can acquire the target codebook with the best channel transmission effect in the original codebook set according to the target precoding matrix indicator.

For example, the first dimension comprises a vertical dimension, a phase value dimension, and a phase difference dimension of a dual-polarized antenna, the first target dimension comprises a phase difference dimension of the dual-polarized antenna, the second dimension comprises a horizontal dimension, and the second target dimension comprises a vertical dimension and a phase value dimension. The original codebook set includes 5120 codebooks, and the codebooks included in the original codebook set have a direction number of 32 in a horizontal dimension, have a direction number of 8 in a vertical dimension, have a direction number 1 of in a phase value dimension, and have a direction number of 4 in a phase difference dimension of a dual-polarized antenna.

Downsampling is performed on an original codebook set in a preset dimension, for example, a downsampling factor in a horizontal dimension is 1/8, a downsampling factor in a vertical dimension is 1/4, a downsampling factor in a phase value dimension is 1, and a downsampling factor in a phase difference dimension of a dual-polarized antenna is 1; therefore, it obtains that a downsampled codebook set comprises (32/8)×(8/4)×1×4 codebooks, i.e. 32 codebooks, a determined first codebook set comprises 32×1×1 codebooks, i.e. 32 codebooks; and a determined second codebook set comprises 1×8×1×1 codebooks, i.e. 8 codebooks, the first quantity is 8, the second quantity is 4, and a correspondingly determined third codebook set comprises 8×4×1 codebooks, i.e. 32 codebooks; that is, under a target rank indicator, 32+32+8+1 codebooks, i.e. 32 codebooks are traversed in total.

In addition, it is determined that the target rank indicator needs to perform traversing in all four rank indicators, and it is assumed that the rank indicator corresponding to 104 codebooks above is 1, and 256 codebooks are traversed in total when the rank indicator is 2, 208 codebooks are traversed in total when the rank indicator is 3, and 208 codebooks are traversed in total when the rank indicator is 4; and the determined fourth codebook set includes 8×4×(4-1) codebooks, i.e. 96 codebooks, and therefore when the target codebook is finally determined, 104+256+208+208+96 codebooks in total, i.e. 872 codebooks, are traversed in total, which reduces the number of codebooks needing to be traversed more than 5120 codebooks of the original codebook set.

According to the method for determining a precoding matrix indicator provided in the embodiments of the present application, an original codebook set is downsampled in a preset dimension, so that fewer codebooks are traversed to determine a codebook with a relatively good channel transmission effect, and codebook sets corresponding to different preset dimension are traversed one by one with regard to different preset dimension, so that the inaccuracy of codebooks caused by a downsampling operation is reduced, the accuracy of a target codebook can be improved while improving the detection efficiency, and the accuracy of determining a precoding matrix indicator is further improved.

Referring to Fig. 6, Fig. 6 is a schematic structural block diagram of a terminal device according to an embodiment of the present application. The terminal device may be a user terminal device.

Referring to Fig. 6, the terminal device 100 includes a processor 110 and a memory 120 that are connected by using a system bus, wherein the memory 120 may include a non-volatile storage medium and an internal memory.

The non-transitory storage medium stores an operating system and a computer program. The computer program comprises a program instruction. When the program instruction is executed, the processor is caused to execute any method for determining a precoding matrix indicator.

The processor is configured to provide computing and control capabilities, and support running of the whole terminal device.

The internal memory provides an environment for running of a computer program in a non-volatile storage medium. When the computer program is executed by a processor, the processor is caused to execute any method for determining a precoding matrix indicator.

A person skilled in the art may understand that the structure shown in Fig. 6 is only a partial block structure related to the solution of the present application, and does not limit the terminal device to which the solution of the present application is applied. A specific terminal device may comprise more or fewer components than those shown in the figure, or be combined with some components, or have different component arrangements.

It should be understood that the processor may be a central processing unit (CPU), and the processor may also be another general processor, a digital signal processor (DSP), an application specific integrated circuit (ASIC), a field-programmable gate array FPGA), or another programmable logic device, a discrete gate, a transistor logic device, a discrete hardware component, etc. The general processor may be a microprocessor, or the processor may also be any conventional processor.

In an embodiment, the processor is used for running of a computer program stored in the memory, so as to realize the following steps: performing, in a preset dimension, downsampling an original codebook set to obtain a downsampled codebook set, wherein codebooks included in the original codebook set all correspond to the preset dimension; determining, from the downsampled codebook set, downsampled codebooks meeting a preset channel condition; and determining target codebooks from the original codebook set according to the downsampled codebooks, and determining a target precoding matrix indicator according to the target codebooks.

In an embodiment, in implementation of performing downsampling on an original codebook set in a preset dimension to obtain a downsampled codebook set, the processor is configured to implement: performing, in a preset dimension, downsampling on an original codebook set according to a downsampling factor corresponding to the preset dimension, so as to obtain a first downsampled codebook set; determining a first precoding matrix indicator corresponding to the first downsampled codebook set; determining a matching degree between the first precoding matrix indicator and an original precoding matrix indicator, wherein the original precoding matrix indicator is a precoding matrix indicator corresponding to the original codebook set; and determining, as a downsampled codebook set, a first downsampled codebook set corresponding to a first precoding matrix indicator of which the matching degree meets a preset matching condition.

In an embodiment, in implementation of determining a first precoding matrix indicator corresponding to the first downsampled codebook set, the processor is configured to implement: determining a codebook with the maximum channel capacity in the first downsampled codebook set, and determining, as a first precoding matrix indicator, a precoding matrix indicator corresponding to the codebook with the maximum channel capacity.

In an embodiment, the preset dimension correspond to a plurality of different downsampling factors, and the processor is further configured to implement: determining matching degrees corresponding to the plurality of different downsampling factors, wherein the matching degree corresponding to each downsampling factor is: a matching degree of a first precoding matrix indicator of a first downsampled codebook set obtained by performing downsampling on an original codebook set according to the downsampling factor, and an original precoding matrix indicator.

Accordingly, when implemented, the processor is used for: determining, from the plurality of different downsampling factors, a target downsampling factor of which the matching degree meets a preset matching condition, wherein the matching degree of the target downsampling factor is greater than matching degrees corresponding to other downsampling factors among the plurality of different downsampling factors; and determining, as a downsampled codebook set, a first downsampled codebook set of a first precoding matrix indicator corresponding to the target downsampling factor.

In an embodiment, in implementation of determining, from the downsampled codebook set, downsampled codebooks meeting a preset channel condition, the processor is configured to implement determining a channel capacity corresponding to a codebook included in the downsampled codebook set, and determining a codebook with the maximum channel capacity as a downsampled codebook.

In an embodiment, in implementation of determining a target codebook from the original codebook set according to the downsampled codebooks, the processor is configured to implement: determining first index values corresponding to the downsampled codebooks in a first dimension, wherein the preset dimension include the first dimension; determining, as a first codebook set, codebooks which are in the original codebook set and correspond to the first index values of the downsampled codebooks in the first dimension.

In an embodiment, in implementation of determining a target codebook from the original codebook set according to the first codebook, the processor is configured to implement: determining a second index value corresponding to the first codebook in a second dimension, wherein the preset dimension further include a second dimension; determining, as a second codebook set, codebooks which are in the original codebook set, correspond to the second index values of the first codebooks in the second dimension, and correspond to the first target index values of the downsampled codebooks in a first target dimension, wherein the first dimension comprises the first target dimension, and the first index values comprise a first target index value corresponding to the first target dimension; and determining a target codebook from the original codebook set according to the first codebook set and the second codebook set.

In an embodiment, in implementation of determining a target codebook from the original codebook set according to the first codebook set and the second codebook set, the processor is configured to implement: determining channel capacities corresponding to the codebooks included in the first codebook set, and determining a first number of codebooks with relatively large channel capacities as a first target codebook set; determining channel capacities corresponding to the codebooks included in the second codebook set, and determining a second number of codebooks with relatively large channel capacities as a second target codebook set; determining second index values corresponding to codebooks included in the first target codebook set in the second dimension, and determining second target index values corresponding to the codebooks included in the second target codebook set in a second target dimension, wherein the first dimension further comprises the second target dimension, and the first index values comprise a second target index value corresponding to the second target dimension; determining, as a third codebook set, codebooks which are in the original codebook set, correspond to the second index values of the codebooks included in the first target codebook set in the second dimension, and correspond to the second target index values of the codebooks included in the second target codebook set in the second target dimension; and determining a target rank indicator according to the third codebook set, and determining a target codebook from the original codebook set according to the target rank indicator.

In an embodiment, the first dimension comprises a vertical dimension, a phase value dimension, and a phase difference dimension of a dual-polarized antenna, the first target dimension comprises a phase difference dimension of the dual-polarized antenna, the second dimension comprises a horizontal dimension, and the second target dimension comprises a vertical dimension and a phase value dimension.

In an embodiment, in implementation of determining a target rank indicator according to the third codebook set, the processor is configured to implement: determining channel capacities, under a preset rank indicator, of codebooks included in the third codebook set, and determining a preset rank indicator corresponding to a maximum channel capacity as a target rank indicator.

In an embodiment, in implementation of determining a target codebook from the original codebook set according to the target rank indicator, the processor is configured to implement: determining, as a third codebook set, codebooks which are in the original codebook set, correspond to the second index values of the codebooks included in the first target codebook set in the second dimension, correspond to the second target index values of the codebooks included in the second target codebook set in the second target dimension, and correspond to third target index values in the first target dimension, wherein the third target index values comprise other index values, except the first target index values of the downsampled codebooks, among all the index values corresponding to the first target dimension; and determining channel capacities corresponding to the codebooks included in the fourth codebook set on the target rank indicator, and determining a codebook with the maximum channel capacity as a target codebook.

**The** embodiments of the present application further provide a computer readable storage medium. **The** computer program comprises a program instruction. **The** processor executes the program instruction to implement any method for determining a precoding matrix indicator provided in the embodiments of the present application.

**The** computer readable storage medium may be an internal storage unit of the terminal device described in the foregoing embodiments, for example, a hard disk or a memory of the terminal device. **The** computer readable storage medium may also be an external storage device of the terminal device, for example, a plug-in hard disk, a smart media card (SMC), a secure digital (SD) card, and a flash card that are equipped on the terminal device.

## Claims

1. A method for determining a precoding matrix indicator, comprising:
Performing (S101), in a preset dimension, downsampling on an original codebook set to obtain a downsampled codebook set, wherein codebooks included in the original codebook set all correspond to the preset dimension;
determining (S102), from the downsampled codebook set, downsampled codebooks meeting a preset channel condition; and
determining (S103) a target codebook from the original codebook set according to the downsampled codebooks, and determining a target precoding matrix indicator according to the target codebook;
wherein the step of performing (S101), in a preset dimension, downsampling on an original codebook set to obtain a downsampled codebook set comprises:
performing (S201), in a preset dimension, downsampling on an original codebook set according to a downsampling factor corresponding to the preset dimension, so as to obtain a first downsampled codebook set;
determining (S202) a first precoding matrix indicator corresponding to the first downsampled codebook set;
determining (S203) a matching degree between the first precoding matrix indicator and an original precoding matrix indicator, wherein the original precoding matrix indicator is a precoding matrix indicator corresponding to the original codebook set; and
determining (S204), as a downsampled codebook set, a first downsampled codebook set corresponding to a first precoding matrix indicator of which the matching degree meets a preset matching condition..

2. **The** method for determining a precoding matrix indicator according to claim 1, wherein determining (S202) a first precoding matrix indicator corresponding to the first downsampled codebook set comprises:
determining a codebook with the maximum channel capacity in the first downsampled codebook set, and determining, as a first precoding matrix indicator, a precoding matrix indicator corresponding to the codebook with the maximum channel capacity.

3. **The** method for determining a precoding matrix indicator according to claim 1 or 2, wherein the preset dimension correspond to a plurality of different downsampling factors, and the method further comprises:
determining matching degrees corresponding to the plurality of different downsampling factors, wherein the matching degree corresponding to each downsampling factor is: a matching degree of a first precoding matrix indicator of a first downsampled codebook set obtained by performing downsampling on an original codebook set according to the downsampling factor, and an original precoding matrix indicator;
determining, as a downsampled codebook set, a first downsampled codebook set corresponding to a first precoding matrix indicator of which the matching degree meets a preset matching condition, comprises:
determining, from the plurality of different downsampling factors, a target downsampling factor of which the matching degree meets a preset matching condition, wherein the matching degree of the target downsampling factor is greater than the matching degrees corresponding to other downsampling factors among the plurality of different downsampling factors;
determining, as a downsampled codebook set, a first downsampled codebook set of a first precoding matrix indicator corresponding to the target downsampling factor.

4. The method for determining a precoding matrix indicator according to any one of claims 1 to 3, wherein determining (S102), from the downsampled codebook set, a downsampled codebook meeting a preset channel condition comprises:
determining a channel capacity corresponding to a codebook included in the downsampled codebook set, and determining a codebook with the maximum channel capacity as a downsampled codebook.

5. The method for determining a precoding matrix indicator according to any one of claims 1 to 4, wherein the preset dimension include a first dimension; and determining (S103) a target codebook from the original codebook set according to the downsampled codebook comprises:
determining (S111) first index values corresponding to the downsampled codebooks in a first dimension;
determining (S112), as a first codebook set, codebooks which are in the original codebook set and correspond to the first index values of the downsampled codebooks in the first dimension;
determining (S113)a codebook with the maximum channel capacity in the first codebook set as a first codebook; and
determining (S114) a target codebook from the original codebook set according to the first codebook.

6. **The** method for determining a precoding matrix indicator according to claim 5, wherein the preset dimension further include a second dimension, and determining (S114) a target codebook from the original codebook set according to the first codebook comprises:
determining (S121) a second index value corresponding to the first codebook in a second dimension;
determining (S122), as a second codebook set, codebooks which are in the original codebook set, correspond to the second index values of the first codebooks in the second dimension, and correspond to the first target index values of the downsampled codebooks in a first target dimension, wherein the first dimension comprises the first target dimension, and the first index values comprise a first target index value corresponding to the first target dimension; and
determining (S123) a target codebook from the original codebook set according to the first codebook set and the second codebook set.

7. **The** method for determining a precoding matrix indicator according to claim 6, wherein determining (S123) a target codebook from the original codebook set according to the first codebook set and the second codebook set comprises:
determining (S131) channel capacities corresponding to the codebooks included in the first codebook set, and determining a first number of codebooks with relatively large channel capacities as a first target codebook set;
determining (S132) channel capacities corresponding to the codebooks included in the second codebook set, and determining a second number of codebooks with relatively large channel capacities as a second target codebook set;
determining (S133) second index values corresponding to codebooks included in the first target codebook set in the second dimension, and determining second target index values corresponding to the codebooks included in the second target codebook set in a second target dimension, wherein the first dimension further comprises the second target dimension, and the first index values comprise a second target index value corresponding to the second target dimension;
determining (S134), as a third codebook set, codebooks which are in the original codebook set, correspond to the second index values of the codebooks included in the first target codebook set in the second dimension, and correspond to the second target index values of the codebooks included in the second target codebook set in the second target dimension; and
determining (S135) a target rank indicator according to the third codebook set, and determining a target codebook from the original codebook set according to the target rank indicator.

8. **The** method for determining a precoding matrix indicator according to claim 7, wherein the first dimension comprises a vertical dimension, a phase value dimension, and a phase difference dimension of a dual-polarized antenna, the first target dimension comprises a phase difference dimension of the dual-polarized antenna, the second dimension comprises a horizontal dimension, and the second target dimension comprises a vertical dimension and a phase value dimension.

9. **The** method for determining a precoding matrix indicator according to claim 7, wherein determining a target rank indicator according to the third codebook set comprises:
determining channel capacities, under a preset rank indicator, of codebooks included in the third codebook set, and determining a preset rank indicator corresponding to a maximum channel capacity as a target rank indicator.

10. **The** method for determining a precoding matrix indicator according to claim 7 or 8, wherein determining a target codebook from the original codebook set according to the target rank indicator comprises:
determining, as a third codebook set, codebooks which are in the original codebook set, correspond to the second index values of the codebooks included in the first target codebook set in the second dimension, correspond to the second target index values of the codebooks included in the second target codebook set in the second target dimension, and correspond to third target index values in the first target dimension, wherein the third target index values comprise other index values, except the first target index values of the downsampled codebooks, among all the index values corresponding to the first target dimension; and
determining channel capacities corresponding to the codebooks included in the fourth codebook set on the target rank indicator, and determining a codebook with the maximum channel capacity as a target codebook.

11. A terminal device (100), comprising a memory (120) and a processor (110);
the memory (120) is configured to store a computer program;
the processor (110) is configured to execute the computer program and implement, when executing the computer program, the method for determining a precoding matrix indicator according to any one of claims 1 to 10.

12. A computer readable storage medium, wherein the computer-readable storage medium stores a computer program, and the computer program, when executed by a processor, causes the processor to implement the method for determining a precoding matrix indicator according to any one of claims 1 to 10.

## Patentansprüche

1. Verfahren zum Bestimmen eines Vorcodierungsmatrixindikators, umfassend:
Durchführen (S101), in einer voreingestellten Dimension, einer Unterabtastung an einem ursprünglichen Codebuchsatz, um einen unterabgetasteten Codebuchsatz zu erhalten, wobei alle in dem ursprünglichen Codebuchsatz eingeschlossenen Codebücher der voreingestellten Dimension entsprechen;
Bestimmen (S102), aus dem unterabgetasteten Codebuchsatz, von unterabgetasteten Codebüchern, die eine voreingestellte Kanalbedingung erfüllen; und
Bestimmen (S103) eines Zielcodebuchs aus dem ursprünglichen Codebuchsatz gemäß den unterabgetasteten Codebüchern und Bestimmen eines Zielvorcodierungsmatrixindikators gemäß dem Zielcodebuch;
wobei der Schritt des Durchführens (S101), in einer voreingestellten Dimension, einer Unterabtastung an einem ursprünglichen Codebuchsatz, um einen unterabgetasteten Codebuchsatz zu erhalten, Folgendes umfasst:
Durchführen (S201), in einer voreingestellten Dimension, einer Unterabtastung an einem ursprünglichen Codebuchsatz gemäß einem Unterabtastfaktor, der der voreingestellten Dimension entspricht, um so einen ersten unterabgetasteten Codebuchsatz zu erhalten;
Bestimmen (S202) eines ersten Vorcodierungsmatrixindikators, der dem ersten unterabgetasteten Codebuchsatz entspricht;
Bestimmen (S203) eines Übereinstimmungsgrads zwischen dem ersten Vorcodierungsmatrixindikator und einem ursprünglichen Vorcodierungsmatrixindikator, wobei der ursprüngliche Vorcodierungsmatrixindikator ein Vorcodierungsmatrixindikator ist, der dem ursprünglichen Codebuchsatz entspricht; und
Bestimmen (S204), als einen unterabgetasteten Codebuchsatz, eines ersten unterabgetasteten Codebuchsatzes, der einem ersten Vorcodierungsmatrixindikator entspricht, dessen Übereinstimmungsgrad eine voreingestellte Übereinstimmungsbedingung erfüllt.

2. Verfahren zum Bestimmen eines Vorcodierungsmatrixindikators gemäß Anspruch 1, wobei das Bestimmen (S202) eines ersten Vorcodierungsmatrixindikators, der dem ersten unterabgetasteten Codebuchsatz entspricht, Folgendes umfasst:
Bestimmen eines Codebuchs mit der maximalen Kanalkapazität in dem ersten unterabgetasteten Codebuchsatz und Bestimmen, als einen ersten Vorcodierungsmatrixindikator, eines Vorcodierungsmatrixindikators, der dem Codebuch mit der maximalen Kanalkapazität entspricht.

3. Verfahren zum Bestimmen eines Vorcodierungsmatrixindikators gemäß Anspruch 1 oder 2, wobei die voreingestellte Dimension einer Vielzahl von unterschiedlichen Unterabtastfaktoren entspricht, und das Verfahren ferner Folgendes umfasst:
Bestimmen von Übereinstimmungsgraden, die der Vielzahl von unterschiedlichen Unterabtastfaktoren entsprechen, wobei der jedem Unterabtastfaktor entsprechende Übereinstimmungsgrad Folgendes ist: ein Übereinstimmungsgrad eines ersten Vorcodierungsmatrixindikators eines ersten unterabgetasteten Codebuchsatzes, der durch Durchführen einer Unterabtastung an einem ursprünglichen Codebuchsatz gemäß dem Unterabtastfaktor erhalten wird, und eines ursprünglichen Vorcodierungsmatrixindikators;
Bestimmen, als einen unterabgetasteten Codebuchsatz, eines ersten unterabgetasteten Codebuchsatzes, der einem ersten Vorcodierungsmatrixindikator entspricht, dessen Übereinstimmungsgrad eine voreingestellte Übereinstimmungsbedingung erfüllt, umfasst:
Bestimmen, aus der Vielzahl von unterschiedlichen Unterabtastfaktoren, eines Zielunterabtastfaktors, dessen Übereinstimmungsgrad eine voreingestellte Übereinstimmungsbedingung erfüllt, wobei der Übereinstimmungsgrad des Zielunterabtastfaktors größer ist als die Übereinstimmungsgrade, die anderen Unterabtastfaktoren aus der Vielzahl von unterschiedlichen Unterabtastfaktoren entsprechen;
Bestimmen, als einen unterabgetasteten Codebuchsatz, eines ersten unterabgetasteten Codebuchsatzes eines ersten Vorcodierungsmatrixindikators, der dem Zielunterabtastfaktor entspricht.

4. Verfahren zum Bestimmen eines Vorcodierungsmatrixindikators gemäß einem der Ansprüche 1 bis 3, wobei das Bestimmen (S102), aus dem unterabgetasteten Codebuchsatz, eines unterabgetasteten Codebuchs, das eine voreingestellte Kanalbedingung erfüllt, Folgendes umfasst:
Bestimmen einer Kanalkapazität, die einem Codebuch entspricht, das in dem unterabgetasteten Codebuchsatz eingeschlossen ist, und Bestimmen eines Codebuchs mit der maximalen Kanalkapazität als ein unterabgetastetes Codebuch.

5. Verfahren zum Bestimmen eines Vorcodierungsmatrixindikators nach einem der Ansprüche 1 bis 4, wobei die voreingestellte Dimension eine erste Dimension einschließt; und das Bestimmen (S103) eines Zielcodebuchs aus dem ursprünglichen Codebuchsatz gemäß dem unterabgetasteten Codebuch Folgendes umfasst:
Bestimmen (S111) erster Indexwerte, die den unterabgetasteten Codebüchern in einer ersten Dimension entsprechen;
Bestimmen (S112), als einen ersten Codebuchsatz, von Codebüchern, die in dem ursprünglichen Codebuchsatz enthalten sind und den ersten Indexwerten der unterabgetasteten Codebücher in der ersten Dimension entsprechen;
Bestimmen (S113) eines Codebuchs mit der maximalen Kanalkapazität in dem ersten Codebuchsatz als ein erstes Codebuch; und
Bestimmen (S114) eines Zielcodebuchs aus dem ursprünglichen Codebuchsatz gemäß dem ersten Codebuch.

6. Verfahren zum Bestimmen eines Vorcodierungsmatrixindikators nach Anspruch 5, wobei die voreingestellte Dimension ferner eine zweite Dimension einschließt, und das Bestimmen (S114) eines Zielcodebuchs aus dem ursprünglichen Codebuchsatz gemäß dem ersten Codebuch Folgendes umfasst:
Bestimmen (S121) eines zweiten Indexwerts, der dem ersten Codebuch in einer zweiten Dimension entspricht;
Bestimmen (S122), als einen zweiten Codebuchsatz, von Codebüchern, die in dem ursprünglichen Codebuchsatz enthalten sind, den zweiten Indexwerten der ersten Codebücher in der zweiten Dimension entsprechen und den ersten Zielindexwerten der unterabgetasteten Codebücher in einer ersten Zieldimension entsprechen, wobei die erste Dimension die erste Zieldimension umfasst und die ersten Indexwerte einen ersten Zielindexwert umfassen, der der ersten Zieldimension entspricht; und
Bestimmen (S123) eines Zielcodebuchs aus dem ursprünglichen Codebuchsatz gemäß dem ersten Codebuchsatz und dem zweiten Codebuchsatz.

7. Verfahren zum Bestimmen eines Vorcodierungsmatrixindikators gemäß Anspruch 6, wobei das Bestimmen (S123) eines Zielcodebuchs aus dem ursprünglichen Codebuchsatz gemäß dem ersten Codebuchsatz und dem zweiten Codebuchsatz Folgendes umfasst:
Bestimmen (S131) von Kanalkapazitäten, die den in dem ersten Codebuchsatz eingeschlossenen Codebüchern entsprechen, und Bestimmen einer ersten Anzahl von Codebüchern mit relativ großen Kanalkapazitäten als einen ersten Zielcodebuchsatz;
Bestimmen (S132) von Kanalkapazitäten, die den in dem zweiten Codebuchsatz eingeschlossenen Codebüchern entsprechen, und Bestimmen einer zweiten Anzahl von Codebüchern mit relativ großen Kanalkapazitäten als einen zweiten Zielcodebuchsatz;
Bestimmen (S133) zweiter Indexwerte, die Codebüchern entsprechen, die in dem ersten Zielcodebuchsatz in der zweiten Dimension eingeschlossen sind, und Bestimmen zweiter Zielindexwerte, die den Codebüchern entsprechen, die in dem zweiten Zielcodebuchsatz in einer zweiten Zieldimension eingeschlossen sind, wobei die erste Dimension ferner die zweite Zieldimension umfasst und die ersten Indexwerte einen zweiten Zielindexwert umfassen, der der zweiten Zieldimension entspricht;
Bestimmen (S134), als einen dritten Codebuchsatz, von Codebüchern, die in dem ursprünglichen Codebuchsatz enthalten sind, den zweiten Indexwerten der Codebücher entsprechen, die in dem ersten Zielcodebuchsatz in der zweiten Dimension eingeschlossen sind, und den zweiten Zielindexwerten der Codebücher entsprechen, die in dem zweiten Zielcodebuchsatz in der zweiten Zieldimension eingeschlossen sind; und
Bestimmen (S135) eines Zielrangindikators gemäß dem dritten Codebuchsatz, und Bestimmen eines Zielcodebuchs aus dem ursprünglichen Codebuchsatz gemäß dem Zielrangindikator.

8. Verfahren zum Bestimmen eines Vorcodierungsmatrixindikators gemäß Anspruch 7, wobei die erste Dimension eine vertikale Dimension, eine Phasenwertdimension und eine Phasendifferenzdimension einer dualpolarisierten Antenne umfasst, die erste Zieldimension eine Phasendifferenzdimension der dualpolarisierten Antenne umfasst, die zweite Dimension eine horizontale Dimension umfasst und die zweite Zieldimension eine vertikale Dimension und eine Phasenwertdimension umfasst.

9. Verfahren zum Bestimmen eines Vorcodierungsmatrixindikators gemäß Anspruch 7, wobei das Bestimmen eines Zielrangindikators gemäß dem dritten Codebuchsatz Folgendes umfasst:
Bestimmen von Kanalkapazitäten, unter einem voreingestellten Rangindikator, von Codebüchern, die in dem dritten Codebuchsatz eingeschlossen sind, und Bestimmen eines voreingestellten Rangindikators, der einer maximalen Kanalkapazität entspricht, als einen Zielrangindikator.

10. Verfahren zum Bestimmen eines Vorcodierungsmatrixindikators gemäß Anspruch 7 oder 8, wobei das Bestimmen eines Zielcodebuchs aus dem ursprünglichen Codebuchsatz gemäß dem Zielrangindikator Folgendes umfasst:
Bestimmen, als einen dritten Codebuchsatz, von Codebüchern, die in dem ursprünglichen Codebuchsatz enthalten sind, den zweiten Indexwerten der Codebücher entsprechen, die in dem ersten Zielcodebuchsatz in der zweiten Dimension eingeschlossen sind, den zweiten Zielindexwerten der Codebücher entsprechen, die in dem zweiten Zielcodebuchsatz in der zweiten Zieldimension eingeschlossen sind, und dritten Zielindexwerten in der ersten Zieldimension entsprechen, wobei die dritten Zielindexwerte andere Indexwerte, außer den ersten Zielindexwerten der unterabgetasteten Codebücher, unter allen Indexwerten umfassen, die der ersten Zieldimension entsprechen; und
Bestimmen von Kanalkapazitäten, die den Codebüchern entsprechen, die in dem vierten Codebuchsatz eingeschlossen sind, auf dem Zielrangindikator, und Bestimmen eines Codebuchs mit der maximalen Kanalkapazität als ein Zielcodebuch.

11. Endgerät (100), umfassend einen Speicher (120) und einen Prozessor (110);
der Speicher (120) ist konfiguriert, um ein Computerprogramm zu speichern;
der Prozessor ist (110) konfiguriert, um das Computerprogramm auszuführen und bei Ausführung des Computerprogramms das Verfahren zum Bestimmen eines Vorcodierungsmatrixindikators gemäß einem der Ansprüche 1 bis 10 zu implementieren.

12. Computerlesbares Speichermedium, wobei das computerlesbare Speichermedium ein Computerprogramm speichert und das Computerprogramm bei Ausführung durch einen Prozessor den Prozessor veranlasst, das Verfahren zum Bestimmen eines Vorcodierungsmatrixindikators gemäß einem der Ansprüche 1 bis 10 zu implementieren.

## Revendications

1. Procédé permettant de déterminer un indicateur de matrice de précodage, comprenant :
la mise en œuvre (S101), dans une dimension prédéfinie, d'un sous-échantillonnage sur un ensemble de livres de codes originaux pour obtenir un ensemble de livres de codes sous-échantillonnés, dans lequel les livres de codes inclus dans l'ensemble de livres de codes originaux correspondent tous à la dimension prédéfinie ;
la détermination (S102), parmi l'ensemble de livres de codes sous-échantillonnés, de livres de codes sous-échantillonnés respectant une condition de canal prédéfinie ; et
la détermination (S103) d'un livre de codes cible provenant de l'ensemble de livres de codes originaux selon les livres de codes sous-échantillonnés, et la détermination d'un indicateur de matrice de précodage cible selon le livre de codes cible ;
dans lequel l'étape de mise en œuvre (S101), dans une dimension prédéfinie, d'un sous-échantillonnage sur un ensemble de livres de codes originaux pour obtenir un ensemble de livres de codes sous-échantillonnés comprend :
la mise en œuvre (S201), dans une dimension prédéfinie, d'un sous-échantillonnage sur un ensemble de livres de codes originaux selon un facteur de sous-échantillonnage correspondant à la dimension prédéfinie, de façon à obtenir un premier ensemble de livres de codes sous-échantillonnés ;
la détermination (S202) d'un premier indicateur de matrice de précodage correspondant au premier ensemble de livres de codes sous-échantillonnés ;
la détermination (S203) d'un degré de concordance entre le premier indicateur de matrice de précodage et un indicateur de matrice de précodage original, dans lequel l'indicateur de matrice de précodage original est un indicateur de matrice de précodage correspondant à l'ensemble de livres de codes originaux ; et
la détermination (S204), en tant qu'ensemble de livres de codes sous-échantillonnés, d'un premier ensemble de livres de codes sous-échantillonnés correspondant à un premier indicateur de matrice de précodage dont le degré de concordance respecte une condition de concordance prédéfinie.

2. Procédé permettant de déterminer un indicateur de matrice de précodage selon la revendication 1, dans lequel la détermination (S202) d'un premier indicateur de matrice de précodage correspondant au premier ensemble de livres de codes sous-échantillonnés comprend :
la détermination d'un livre de codes avec la capacité de canal maximale dans le premier ensemble de livres de codes sous-échantillonnés, et la détermination, en tant que premier indicateur de matrice de précodage, d'un indicateur de matrice de précodage correspondant au livre de codes avec la capacité de canal maximale.

3. Procédé permettant de déterminer un indicateur de matrice de précodage selon la revendication 1 ou 2, dans lequel la dimension prédéfinie correspond à une pluralité de facteurs de sous-échantillonnage différents, et le procédé comprend en outre :
la détermination de degrés de concordance correspondant à la pluralité de facteurs de sous-échantillonnage différents, dans lequel le degré de concordance correspondant à chaque facteur de sous-échantillonnage est : un degré de concordance d'un premier indicateur de matrice de précodage d'un premier ensemble de livres de codes sous-échantillonnés obtenu en mettant en œuvre un sous-échantillonnage sur un ensemble de livres de codes originaux selon le facteur de sous-échantillonnage, et un indicateur de matrice de précodage original ;
la détermination, en tant qu'ensemble de livres de codes sous-échantillonnés, d'un premier ensemble de livres de codes sous-échantillonnés correspondant à un premier indicateur de matrice de précodage dont le degré de concordance respecte une condition de concordance prédéfinie, comprend :
la détermination, parmi la pluralité de facteurs de sous-échantillonnage différents, d'un facteur de sous-échantillonnage cible dont le degré de concordance respecte une condition de concordance prédéfinie, dans lequel le degré de concordance du facteur de sous-échantillonnage cible est supérieur aux degrés de concordance correspondant à d'autres facteurs de sous-échantillonnage parmi la pluralité de facteurs de sous-échantillonnage différents ;
la détermination, en tant qu'ensemble de livres de codes sous-échantillonnés, d'un premier ensemble de livres de codes sous-échantillonnés d'un premier indicateur de matrice de précodage correspondant au facteur de sous-échantillonnage cible.

4. Procédé permettant de déterminer un indicateur de matrice de précodage selon l'une quelconque des revendications 1 à 3, dans lequel la détermination (S102), parmi l'ensemble de livres de codes sous-échantillonnés, d'un livre de codes sous-échantillonné respectant une condition de canal prédéfinie comprend :
la détermination d'une capacité de canal correspondant à un livre de codes inclus dans l'ensemble de livres de codes sous-échantillonnés, et la détermination d'un livre de codes avec la capacité de canal maximale en tant que livre de codes sous-échantillonné.

5. Procédé permettant de déterminer un indicateur de matrice de précodage selon l'une quelconque des revendications 1 à 4, dans lequel la dimension prédéfinie comporte une première dimension ; et la détermination (S103) d'un livre de codes cible parmi l'ensemble de livres de codes originaux selon le livre de codes sous-échantillonné comprend :
la détermination (S111) de premières valeurs d'index correspondant aux livres de codes sous-échantillonnés dans une première dimension ;
la détermination (S112), en tant que premier ensemble de livres de codes, de livres de codes qui sont dans l'ensemble de livres de codes originaux et correspondent aux premières valeurs d'index des livres de codes sous-échantillonnés dans la première dimension ;
la détermination (S113) d'un livre de codes avec la capacité de canal maximale dans le premier ensemble de livres de codes en tant que premier livre de codes ; et
la détermination (S114) d'un livre de codes cible parmi l'ensemble de livres de codes originaux selon le premier livre de codes.

6. Procédé permettant de déterminer un indicateur de matrice de précodage selon la revendication 5, dans lequel la dimension prédéfinie comporte en outre une seconde dimension, et la détermination (S114) d'un livre de codes cible parmi l'ensemble de livres de codes originaux selon le premier livre de codes comprend :
la détermination (S121) d'une deuxième valeur d'index correspondant au premier livre de codes dans une seconde dimension ;
la détermination (S122), en tant que deuxième ensemble de livres de codes, de livres de codes qui sont dans l'ensemble de livres de codes originaux, correspondent aux deuxièmes valeurs d'index des premiers livres de codes dans la seconde dimension, et correspondent aux premières valeurs d'index cibles des livres de codes sous-échantillonnés dans une première dimension cible, dans lequel la première dimension comprend la première dimension cible, et les premières valeurs d'index comprennent une première valeur d'index cible correspondant à la première dimension cible ; et
la détermination (S123) d'un livre de codes cible parmi l'ensemble de livres de codes originaux selon le premier ensemble de livres de codes et le deuxième ensemble de livres de codes.

7. Procédé permettant de déterminer un indicateur de matrice de précodage selon la revendication 6, dans lequel la détermination (S123) d'un livre de codes cible parmi l'ensemble de livres de codes originaux selon le premier ensemble de livres de codes et le deuxième ensemble de livres de codes comprend :
la détermination (S131) de capacités de canal correspondant aux livres de codes inclus dans le premier ensemble de livres de codes, et la détermination d'un premier nombre de livres de codes avec des capacités de canal relativement grandes en tant que premier ensemble de livres de codes cibles ;
la détermination (S132) de capacités de canal correspondant aux livres de codes inclus dans le deuxième ensemble de livres de codes, et la détermination d'un second nombre de livres de codes avec des capacités de canal relativement grandes en tant que second ensemble de livres de codes cibles ;
la détermination (S133) de deuxièmes valeurs d'index correspondant à des livres de codes inclus dans le premier ensemble de livres de codes cibles dans la seconde dimension, et la détermination de deuxièmes valeurs d'index cibles correspondant aux livres de codes inclus dans le second ensemble de livres de codes cibles dans une seconde dimension cible, dans lequel la première dimension comprend en outre la seconde dimension cible, et les premières valeurs d'index comprennent une deuxième valeur d'index cible correspondant à la seconde dimension cible ;
la détermination (S134), en tant que troisième ensemble de livres de codes, de livres de codes qui sont dans l'ensemble de livres de codes originaux, correspondent aux deuxièmes valeurs d'index des livres de codes inclus dans le premier ensemble de livres de codes cibles dans la seconde dimension, et correspondent aux deuxièmes valeurs d'index cibles des livres de codes inclus dans le second ensemble de livres de codes cibles dans la seconde dimension cible ; et
la détermination (S135) d'un indicateur de rang cible selon le troisième ensemble de livres de codes, et la détermination d'un livre de codes cible parmi l'ensemble de livres de codes originaux selon l'indicateur de rang cible.

8. Procédé permettant de déterminer un indicateur de matrice de précodage selon la revendication 7, dans lequel la première dimension comprend une dimension verticale, une dimension de valeur de phase, et une dimension de différence de phase d'une antenne à polarisation double, la première dimension cible comprend une dimension de différence de phase de l'antenne à polarisation double, la seconde dimension comprend une dimension horizontale, et la seconde dimension cible comprend une dimension verticale et une dimension de valeur de phase.

9. Procédé permettant de déterminer un indicateur de matrice de précodage selon la revendication 7, dans lequel la détermination d'un indicateur de rang cible selon le troisième ensemble de livres de codes comprend :
la détermination de capacités de canal, selon un indicateur de rang prédéfini, de livres de codes inclus dans le troisième ensemble de livres de codes, et la détermination d'un indicateur de rang prédéfini correspondant à une capacité de canal maximale en tant qu'indicateur de rang cible.

10. Procédé permettant de déterminer un indicateur de matrice de précodage selon la revendication 7 ou 8, dans lequel la détermination d'un livre de codes cible parmi l'ensemble de livres de codes originaux selon l'indicateur de rang cible comprend :
la détermination, en tant que troisième ensemble de livres de codes, de livres de codes qui sont dans l'ensemble de livres de codes originaux, correspondent aux deuxièmes valeurs d'index des livres de codes inclus dans le premier ensemble de livres de codes cibles dans la seconde dimension, correspondent aux deuxièmes valeurs d'index cibles des livres de codes inclus dans le second ensemble de livres de codes cibles dans la seconde dimension cible, et correspondent à des troisièmes valeurs d'index cibles dans la première dimension cible, dans lequel les troisièmes valeurs d'index cibles comprennent d'autres valeurs d'index, à l'exception des premières valeurs d'index cibles des livres de codes sous-échantillonnés, parmi toutes les valeurs d'index correspondant à la première dimension cible ; et
la détermination de capacités de canal correspondant aux livres de codes inclus dans le quatrième ensemble de livres de codes sur l'indicateur de rang cible, et la détermination d'un livre de codes avec la capacité de canal maximale en tant que livre de codes cible.

11. Dispositif terminal (100), comprenant une mémoire (120) et un processeur (110) ;
la mémoire (120) est configurée pour stocker un programme d'ordinateur ;
le processeur (110) est configuré pour exécuter le programme d'ordinateur et implémenter, lors de l'exécution du programme d'ordinateur, le procédé permettant de déterminer un indicateur de matrice de précodage selon l'une quelconque des revendications 1 à 10.

12. Support de stockage lisible par ordinateur, dans lequel le support de stockage lisible par ordinateur stocke un programme d'ordinateur, et le programme d'ordinateur, lorsqu'il est exécuté par un processeur, amène le processeur à implémenter le procédé permettant de déterminer un indicateur de matrice de précodage selon l'une quelconque des revendications 1 à 10.
